# EUROPEAN PATENT APPLICATION

(11) **EP 2 230 619 A1**
(43) Date of publication of application: **22.09.2010**
(21) Application number: 10155644.7
(22) Date of filing: 05.03.2010
(51) Int. Cl.: G06F 21/00, G07C 9/00

(54) **Microelectronic lock system**

(30) Priority: 21.10.2009 US 582712; 19.03.2009 HK 09102684
(71) Applicant: Shining Union Limited, Tsuen Wan Hong Kong TWTL 353 (CN)
(72) Inventor: Wong, Kwok Fong, TWTL 353, Tsuen Wan (CN); Ching, Pui Yi, TWTL 353, Tsuen Wan (CN)
(74) Representative: Johansson, Lars-Erik

(57) **Abstract**

A microelectronic lock system includes a computer interface for connecting to an external computer; a biometric interface configured for connecting to a biometric sensor and receiving biometric data that a user inputs to the biometric sensor; and a control unit connected to the biometric interface and the computer interface. The control unit is configured to transmit the biometric data received through the biometric interface to the external computer through the computer interface, to receive data from the external computer through the computer interface, and to determine whether to grant access to the user according to the received data.

## Description

### FIELD OF THE INVENTION

The present invention generally relates to a microelectronic lock system and more particularly to a secure and intelligent microelectronic lock system utilizing a biometric sensor.

### BACKGROUND OF THE INVENTION

Biometric sensors have been used in lock systems for providing biometric data for identification purposes. In such a system, a biometric feature, such as a user's fingerprint is measured by the biometric sensor and compared with data stored in the lock system beforehand. If the measured biometric feature matches the data stored in the lock system, the lock system closes a switch and thereby grants access to the user. For such a lock system, it is generally desired to have high recognition accuracy, the capability of recognizing a variety of biometric features and relatively low cost.

### SUMMARY OF THE INVENTION

The present patent application is directed to a microelectronic lock system. In one aspect, the microelectronic lock system includes a computer interface for connecting to an external computer; a biometric interface configured for connecting to a biometric sensor and receiving biometric data that a user inputs to the biometric sensor; and a control unit connected to the biometric interface and the computer interface. The control unit is configured to transmit the biometric data received through the biometric interface to the external computer through the computer interface, to receive data from the external computer through the computer interface, and to determine whether to grant access to the user according to the received data.

The computer interface may be configured to receive an encoded security key from the external computer. The control unit may be configured to decode the security key, to determine if the security key is genuine, to grant access to the user if the security key is determined to be genuine, and to deny access to the user if the security key is determined to be not genuine.

The encoded security key received by the computer interface may be generated by performing a first set of operations on a code sequence. The control unit may be configured to perform a second set of operations on the encoded security key so as to restore the code sequence, and to compare the restored code sequence and a reference code sequence so as to determine if the security key is genuine.

The first set of operations and the second set of operations may be both based on the biometric data that the user inputs to the biometric sensor.

The code sequence may be randomly generated from a predetermined security key. The reference code sequence may be generated by performing an operation on a predetermined security key stored locally with the control unit, the operation being communicated to the control unit through the computer interface.

The microelectronic lock system may further include a speaker or a buzzer for sounding an alarm when the control unit denies access to the user for a predetermined number of times consecutively.

The microelectronic lock system may further include a timing unit. The timing unit is configured for counting down from a predetermined time point to zero and thereby controlling the time period for sounding the alarm.

In another aspect, the present patent application provides a microelectronic lock system. The microelectronic lock system includes a remote processor; a biometric interface configured for connecting to a biometric sensor and receiving biometric data that a user inputs to the biometric sensor; and a control unit connected to the biometric interface and the remote processor. The control unit is configured to transmit the biometric data received through the biometric interface to the remote processor, to receive data from the remote processor, and to determine whether to grant access to the user according to the received data. The remote processor is configured to compare the biometric data that the user inputs to the biometric sensor with biometric data stored in a database beforehand and if a match is identified to transmit an encoded security key to the control unit. The encoded security key is generated by performing a first set of operations on a code sequence. The control unit is configured to perform a second set of operations on the encoded security key so as to restore the code sequence, to compare the restored code sequence and a reference code sequence so as to determine if the security key is genuine, and to grant access to the user if the security key is determined to be genuine.

The control unit may be configured to grant access to the user by closing a semiconductor analog switch. The semiconductor analog switch is connected to the control unit and controllable by the control unit.

The first set of operations and the second set of operations may be both based on the biometric data that the user inputs to the biometric sensor.

The code sequence may be randomly generated from a predetermined security key. The reference code sequence may be generated by performing an operation on a predetermined security key stored locally with the control unit, the operation being communicated from the remote processor to the control unit.

The microelectronic lock system may further include a speaker or a buzzer for sounding an alarm when the control unit opens the switch for a predetermined number of times consecutively.

The microelectronic lock system may further include a timing unit. The timing unit is configured for counting down from a predetermined time point to zero and thereby controlling the time period for sounding the alarm.

The control unit may be configured to control the semiconductor analog switch through radio frequency (RF) communication or infrared communication.

The microelectronic lock system may further include a computer interface connecting the control unit to the remote processor and being configured for transferring data therebetween.

In yet another aspect, the present patent application provides a microelectronic lock system. The microelectronic lock system includes a remote processor; a biometric interface configured for connecting to a biometric sensor and receiving biometric data that a user inputs to the biometric sensor; and a control unit connected to the biometric interface and the remote processor. The control unit is configured to transmit the biometric data received through the biometric interface to the remote processor, to receive data from the remote processor, and to determine whether to grant access to the user according to the received data. The remote processor is configured to compare the biometric data that the user inputs to the biometric sensor with biometric data stored in a database beforehand, to transmit an encoded security key to the control unit if a match is identified, the encoded security key being generated by performing a first set of operations on a code sequence, and to control the control unit to deny access to the user if no match is identified. The control unit is configured to perform a second set of operations on the encoded security key so as to restore the code sequence, to compare the restored code sequence and a reference code sequence so as to determine if the security key is genuine, to grant access to the user if the security key is determined to be genuine and to deny access to the user if the security key is determined to be not genuine.

The control unit may be configured to grant access to the user by closing a semiconductor analog switch. The semiconductor analog switch is connected to the control unit and controllable by the control unit.

The first set of operations and the second set of operations may be both based on the biometric data that the user inputs to the biometric sensor.

The code sequence may be randomly generated from a predetermined security key. The reference code sequence is generated by performing an operation on a predetermined security key stored locally with the control unit, the operation being communicated from the remote processor to the control unit.

The microelectronic lock system may further include a storage unit. The storage unit is disposed locally with the control unit and configured for storing user specific biometric data and security keys.

### BRIEF DESCRIPTION OF THE DRAWINGS

FIG. 1 is a block diagram of a microelectronic lock system according to an embodiment of the present patent application.
FIG. 2 is a block diagram of a microelectronic lock system according to another embodiment of the present patent application
FIGS. 3a and 3b are schematic circuit diagrams of the microelectronic lock system depicted in FIG. 2

### DETAILED DESCRIPTION OF THE INVENTION

Reference will now be made in detail to a preferred embodiment of the microelectronic lock system disclosed in the present patent application, examples of which are also provided in the following description. Exemplary embodiments of the microelectronic lock system disclosed in the present patent application are described in detail, although it will be apparent to those skilled in the relevant art that some features that are not particularly important to an understanding of the microelectronic lock system may not be shown for the sake of clarity.

Furthermore, it should be understood that the microelectronic lock system disclosed in the present patent application is not limited to the precise embodiments described below and that various changes and modifications thereof may be effected by one skilled in the art without departing from the spirit or scope of the protection. For example, elements and/or features of different illustrative embodiments may be combined with each other and/or substituted for each other within the scope of this disclosure.

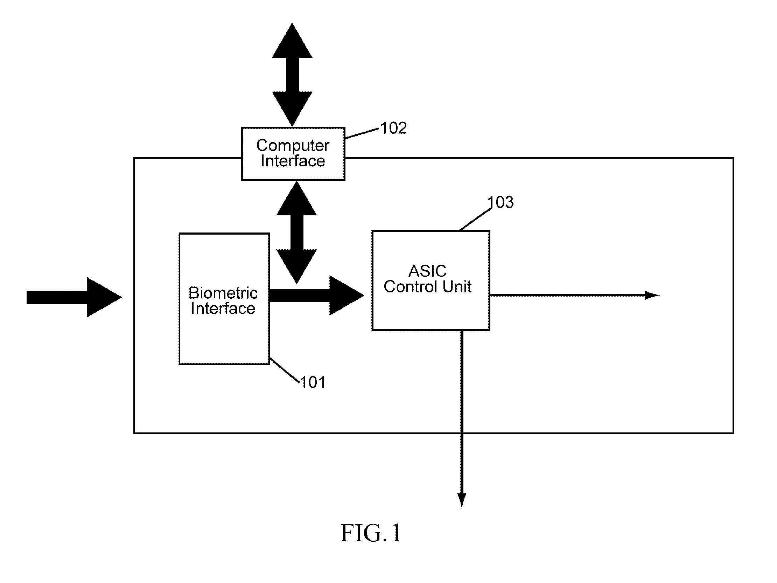

FIG. 1 is a block diagram of a microelectronic lock system according to an embodiment of the present patent application. Referring to FIG. 1, the microelectronic lock system includes a biometric interface 101 configured for connecting to a biometric sensor (not shown in FIG. 1) and receiving biometric data that a user inputs to the biometric sensor, a computer interface 102 for connecting to an external computer (not shown in FIG. 1), and a control unit 103. In this embodiment, the biometric interface 101 and the computer interface 102 are standard USB (Universal Serial Bus) interfaces. It is understood that other interfaces (e.g., a serial peripheral interface (SPI) bus, an inter-integrated circuit (I²C) bus, or a recommended standard 232 (RS-232) bus) can also be used. The control unit 103 includes an ASIC (application-specific integrated circuit) core engine. The control unit 103 is connected to the biometric interface 101 and the computer interface 102, and configured to transmit the biometric data received through the biometric interface 101 to the external computer that the computer interface 102 is connected to, to receive data from the external computer, and to determine to grant access to the user according to the received data.

In operation, when a user inputs biometric data to the microelectronic lock system through the biometric sensor, for example, by swiping a finger at a fingerprint sensor connected to the system through the biometric interface 101, the biometric data is transmitted to the external computer through the computer interface 102 under the control of the control unit 103. The external computer is configured to compare the biometric data that the biometric sensor acquires from the user with biometric data stored in a database beforehand. If the external computer identifies a match between the biometric data that the biometric sensor acquires from the user and the biometric data stored in the database, the external computer is configured to transmit an encoded security key to the control unit 103 of the microelectronic lock system and the control unit 103 is configured to decode the security key and determine if the decoded security key is genuine. If the decoded security key is determined to be genuine, then the user is granted access by the microelectronic lock system. Otherwise, the authentication fails and the user's access is denied. If the biometric data that biometric sensor acquires from the user does not match the biometric data stored in the database, the authentication fails and the user's access is denied by the control unit 103 immediately.

It is understood that for security purposes, the choice of the security keys and/or the encoding/decoding algorithms thereof may be deliberately designed and kept as secret from general public. As an illustrative example, a valid security key K may be stored in both the external computer and the control unit 103 beforehand. When the external computer identifies a match between the biometric data that the biometric sensor acquires from the user and the biometric data stored in the database, a predetermined number of bits may be selected from the security key K based on a random criteria S so that a code sequence S(K) is generated. Then a first operation may be performed on the randomly generated code sequence S(K) and thereby a code O(S(K)) is generated and sent to the control unit 103. The control unit 103 is configured to perform a second operation O' on the code O(S(K)). The second operation O' is reverse to the first operation O so that the formerly randomly generated code sequence S(K) is restored by the control unit 103. The external computer is configured to send the selection criteria S to the control unit 103 also so that the control unit 103 can be configured to make a selection on the security key K, which is stored locally with the control unit 103 by an internal storage unit (not shown in FIG. 1), according to the criteria S and a reference code sequence S(K) is thereby generated. The control unit 103 is configured to then compare the restored code sequence and the reference code sequence, both of which should be S(K) if the security key is genuine. Thus, if the restored code sequence matches the reference code sequence, the control unit 103 is configured to determine that the decoded security key is genuine and thereby grant access to the user.

If, however, an attempt to crack the microelectronic lock system makes the external computer send a code O(S(K')) based on a false security key K', then after the above-mentioned second operation O', the restored code sequence is S(K'). When the control unit 103 finds out that S(K') does not match S(K), the decoded security key is determined to be not genuine and access is thereby denied to the user.

In the above example, because the selection criteria S is random in nature and the operation O can be sophistically designed, for example, to incorporate predetermined user specific biometric data, the locking mechanism in this embodiment is highly secure.

In this embodiment, the external computer includes a processor that is remote to the biometric sensor and configured for processing the data and managing the communication between the external computer and the rest of the microelectronic lock system. It is understood that different types of processors and different computer architectures can be deployed to perform the above-mentioned operations.

In this embodiment, the microelectronic lock system further includes an internal storage unit (not shown in FIG. 1) and a storage interface (not shown in FIG. 1) for connecting to an external storage unit, both of which are configured for storing users' biometric data such as fingerprint images and security keys for authorized users. The microelectronic lock system further includes a timing unit (not shown in FIG. 1). When a user's biometric data fails to authenticate with the microelectronic locking system for three (or another predetermined number of) times consecutively, an alarm is sounded by a speaker or a buzzer until a countdown counter in the timing unit counts down from a predetermined timing point and reaches zero. For example, the predetermined timing point may be preset to be five minutes. In this embodiment, the alarm maybe turned off when this or another user successfully authenticates with the system with another input of biometric data. A warning LED (light-emitting diode) may be turned on and blinking while the alarm is sounded.

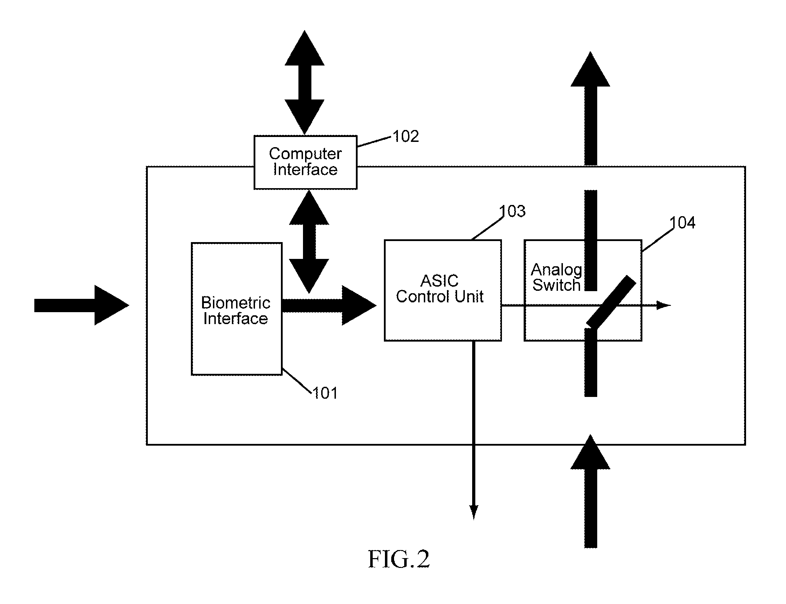

FIG. 2 is a block diagram of a microelectronic lock system according to another embodiment of the present patent application. Referring to FIG. 2, in this embodiment, the microelectronic lock system further includes a switch 104 connected to the control unit 103 and controlled thereby. The switch may be a semiconductor analog switch that connects the microelectronic lock system to an external device (not shown in FIG. 2). It is understood that the switch may alternatively be a microelectronic digital switch. When a biometric authentication, which in this embodiment is a fingerprint authentication, succeeds and the switch 104 is controlled by the control unit 103 to be in a closed condition, the external device is initiated to work. When a biometric authentication fails and the switch 104 is controlled by the control unit 103 to be in an open condition, the external device is stopped from working. It is understood that the microelectronic lock system may have more than one switch and the result of a biometric data authentication may control all the switches respectively connected to the control unit 103 and all the external devices respectively connected to the switches. The external devices may be, for example, a solenoid, a relay, a motor, a mechanical lock, a mechanical door, other mechanical devices and etc.

It is noted the connection between the control unit 103 and the switch 104 may be a wired or wireless connection. For example, in one embodiment, the control unit 103 may include a RF (radio frequency) transmitter and the switch 104 may include a RF receiver so that the control unit 103 is configured to control the switch 104 through RF communication. In another embodiment, the control unit 103 may include an infrared transmitter and the switch 104 may include an infrared receiver so that the control unit 103 is configured to control the switch 104 through infrared communication.

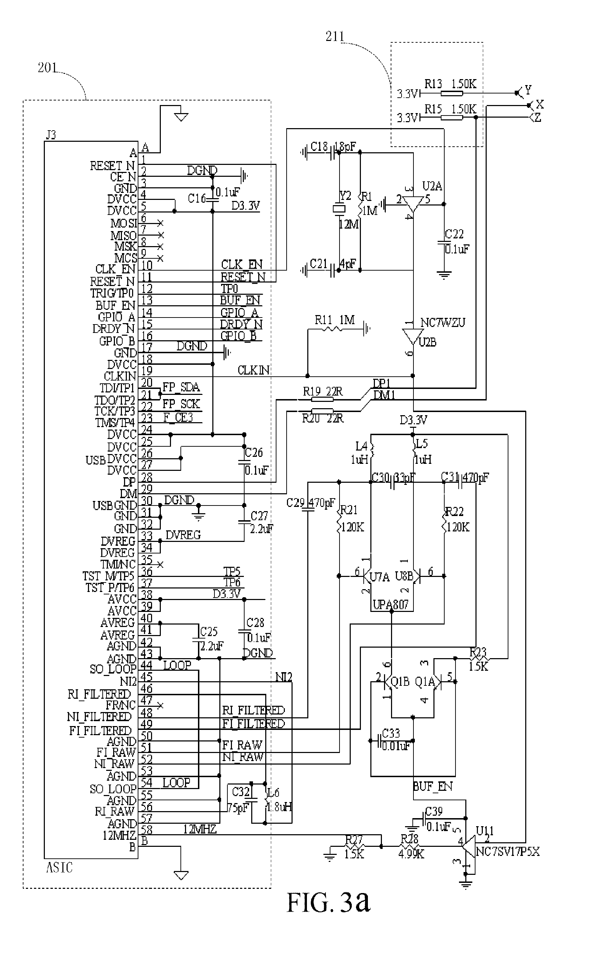

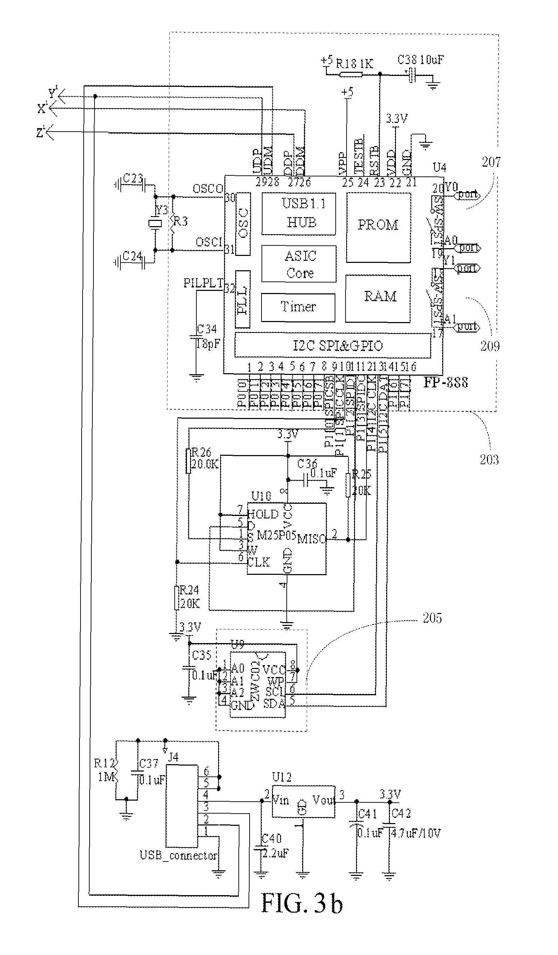

FIGS. 3a and 3b are schematic circuit diagram of the microelectronic lock system depicted in FIG. 2. X,Y and Z in FIG. 3a are connected to X', Y' and Z' in FIG. 3b, respectively. Referring to FIGS. 3a and 3b, block 201 corresponds to the biometric interface 101 in FIG. 2, which is, the interface that connects to a fingerprint sensor. Block 203 corresponds to the control unit 103 in FIG. 2, which includes an ASIC core engine. Ports 207 and 209 respectively refer to ports for connecting the control unit to two microelectronic analog switches. Block 205 corresponds to the internal storage unit which is a memory chip. Block 211 corresponds to the computer interface 102 in FIG. 2.

While the present patent application has been shown and described with particular references to a number of embodiments thereof, it should be noted that various other changes or modifications may be made without departing from the scope of the present invention.

## Claims

1. A microelectronic lock system comprising:
a computer interface for connecting to an external computer;
a biometric interface configured for connecting to a biometric sensor and receiving biometric data that a user inputs to the biometric sensor; and
a control unit connected to the biometric interface and the computer interface, the control unit being configured to transmit the biometric data received through the biometric interface to the external computer through the computer interface, to receive data from the external computer through the computer interface, and to determine whether to grant access to the user according to the received data.

2. The microelectronic lock system of claim 1, wherein the computer interface is configured to receive an encoded security key from the external computer and the control unit is configured to decode the security key, to determine if the security key is genuine, to grant access to the user if the security key is determined to be genuine, and to deny access to the user if the security key is determined to be not genuine.

3. The microelectronic lock system of claim 2, wherein the encoded security key received by the computer interface is generated by performing a first set of operations on a code sequence, and the control unit is configured to perform a second set of operations on the encoded security key so as to restore the code sequence, and to compare the restored code sequence and a reference code sequence so as to determine if the security key is genuine.

4. The microelectronic lock system of claim 3, wherein the code sequence is randomly generated from a predetermined security key and the reference code sequence is generated by performing an operation on a predetermined security key stored locally with the control unit, the operation being communicated to the control unit through the computer interface.

5. The microelectronic lock system of claim 1 further comprising a speaker or a buzzer for sounding an alarm when the control unit denies access to the user for a predetermined number of times consecutively.

6. A microelectronic lock system comprising:
a remote processor;
a biometric interface configured for connecting to a biometric sensor and receiving biometric data that a user inputs to the biometric sensor; and
a control unit connected to the biometric interface and the remote processor, the control unit being configured to transmit the biometric data received through the biometric interface to the remote processor, to receive data from the remote processor, and to determine whether to grant access to the user according to the received data; wherein:
the remote processor is configured to compare the biometric data that the user inputs to the biometric sensor with biometric data stored in a database beforehand and if a match is identified to transmit an encoded security key to the control unit, the encoded security key being generated by performing a first set of operations on a code sequence; and
the control unit is configured to perform a second set of operations on the encoded security key so as to restore the code sequence, to compare the restored code sequence and a reference code sequence so as to determine if the security key is genuine, and to grant access to the user if the security key is determined to be genuine.

7. The microelectronic lock system of claim 6, wherein the control unit is configured to grant access to the user by closing a semiconductor analog switch, the semiconductor analog switch being connected to the control unit and controllable by the control unit.

8. The microelectronic lock system of claim 7 further comprising a speaker or a buzzer for sounding an alarm when the control unit opens the semiconductor analog switch for a predetermined number of times consecutively.

9. The microelectronic lock system of claim 5 or 8 further comprising a timing unit, the timing unit being configured for counting down from a predetermined time point to zero and thereby controlling the time period for sounding the alarm.

10. The microelectronic lock system of claim 7, wherein the control unit is configured to control the semiconductor analog switch through radio frequency (RF) communication or infrared communication.

11. The microelectronic lock system of claim 6 further comprising a computer interface connecting the control unit to the remote processor and being configured for transferring data therebetween.

12. A microelectronic lock system comprising:
a remote processor;
a biometric interface configured for connecting to a biometric sensor and receiving biometric data that a user inputs to the biometric sensor; and
a control unit connected to the biometric interface and the remote processor, the control unit being configured to transmit the biometric data received through the biometric interface to the remote processor, to receive data from the remote processor, and to determine whether to grant access to the user according to the received data; wherein:
the remote processor is configured to compare the biometric data that the user inputs to the biometric sensor with biometric data stored in a database beforehand, to transmit an encoded security key to the control unit if a match is identified, the encoded security key being generated by performing a first set of operations on a code sequence, and to control the control unit to deny access to the user if no match is identified; and
the control unit is configured to perform a second set of operations on the encoded security key so as to restore the code sequence, to compare the restored code sequence and a reference code sequence so as to determine if the security key is genuine, to grant access to the user if the security key is determined to be genuine and to deny access to the user if the security key is determined to be not genuine.

13. The microelectronic lock system of claim 12, wherein the control unit is configured to grant access to the user by closing a semiconductor analog switch, the semiconductor analog switch being connected to the control unit and controllable by the control unit.

14. The microelectronic lock system of any one of claims 3, 6 and 12, wherein the first set of operations and the second set of operations are both based on the biometric data that the user inputs to the biometric sensor.

15. The microelectronic lock system of claim 6 or 12, wherein the code sequence is randomly generated from a predetermined security key and the reference code sequence is generated by performing an operation on a predetermined security key stored locally with the control unit, the operation being communicated from the remote processor to the control unit.

16. The microelectronic lock system of claim 12 further comprising a storage unit, the storage unit being disposed locally with the control unit and configured for storing user specific biometric data and security keys.
